# EUROPÄISCHE PATENTSCHRIFT

(11) **EP 3 323 704 B1**
(45) Veröffentlichungstag und Bekanntmachung des Hinweises auf die Patenterteilung: **06.05.2020**
(21) Anmeldenummer: 17191552.3
(22) Anmeldetag: 18.09.2017
(51) Int. Cl.: B62M 6/55, B62M 11/12, B62M 11/14, B62M 9/10, F16H 63/06, F16H 15/52

(54) **GETRIEBEANORDNUNG FÜR EIN ELEKTRISCH ANGETRIEBENES FORTBEWEGUNGSMITTEL MIT EINEM VARIATORGETRIEBE**
TRANSMISSION ASSEMBLY FOR AN ELECTRICALLY DRIVEN MEANS OF TRANSPORT COMPRISING A VARIATOR TRANSMISSION
DISPOSITIF DE TRANSMISSION POUR UN MOYEN DE LOCOMOTION À MOTEUR ÉLECTRIQUE COMPRENANT UNE TRANSMISSION À VARIATEUR

(30) Priorität: 18.11.2016 DE 102016222745
(43) Veröffentlichungstag der Anmeldung: 23.05.2018
(73) Patentinhaber: Robert Bosch GmbH, 70442 Stuttgart (DE)
(72) Erfinder: Klauk, Dietrich, 70469 Stuttgart (DE); Hilzinger, Juergen, 71272 Renningen (DE)

(56) Entgegenhaltungen:
- WO-A1-2016/177494
- US-A- 2 973 671
- US-A1- 2010 120 577

## Beschreibung

### Stand der Technik

Die vorliegende Erfindung betrifft eine Getriebeanordnung für ein Muskelkraft-betreibbares Fahrzeug mit einem elektrischen Hilfsantrieb mit einer Schaltautomatik bzw. Schaltunterstützung in Form eines Variatorgetriebes, dessen Übersetzungsverhältnis mittels eines motorisch, insbesondere elektrisch, betreibbaren Aktors verstellbar ist. Weiter umfasst die Erfindung ein zugehöriges Fortbewegungsmittel, beispielsweise ein Elektrofahrrad bzw. sogenanntes Pedelec und/oder Elektroleichtfahrzeug bzw. sogenanntes LEVs (Light Electric Vehicle). Insbesondere betrifft die Erfindung die behelfsweise bzw. bedarfsweise Möglichkeit einer manuellen Verstellung des Übersetzungsverhältnisses im Falle eines unerwarteten Defektes der Elektrik oder für eine Reparatur.

Die schaltunterstützten Systeme mit Variatorgetriebe im Stand der Technik haben gemeinsam, dass die Verstellung des Übersetzungsverhältnisses ausschließlich über den motorisch, insbesondere elektrisch, betreibbaren Aktor ohne mechanischen Durchgriff des Fahrers erfolgt. Bei fortgeschrittenen Systemen mit Schaltautomatik wird der Aktor auf Basis ermittelter Fahrparameter und/oder eines eingegebenen Fahrerwunsches angesteuert.

DE 10 2013 012 160 A1 offenbart ein stufenloses Nabengetriebe für Fahrräder, Pedelecs und e-bikes, mit und ohne automatischer Anpassung des Übersetzungsverhältnisses an die Fahrgeschwindigkeit in leichter Bauweise und mit einem hohen Wirkungsgrad.

EP2669550 offenbart eine Statorbaugruppe für ein stufenloses CVT-Getriebe, welches eine Vielzahl von Traktionsplanetenanordnungen aufweist.

US8818661 offenbart ein Verfahren zu Steuerung einer Antriebsmaschine und eines stufenlosen CVT-Getriebes, welches eine Gruppe von sphärischen Antriebskrafteinstellmitteln und Leistungsstellern mit jeweilig kippbarer Drehachse umfasst.

WO 2016/177494 A1 offenbart ein mit Muskelkraft-betreibbares Fahrzeug mit einem elektrischen Hilfsantrieb mit den Merkmalen der Präambel des Anspruchs 1.

### Offenbarung der Erfindung

Durch die erfindungsgemäße Getriebeanordnung wird in einer Weiterentwicklung der bestehenden Systeme eine neue Möglichkeit geschaffen, den Aktor für die Gangverstellung bei Ausfallen der Schaltunterstützung bzw. Schaltautomatik von außen ersatzweise manuell betätigen zu können. Erfindungsgemäß umfasst die Getriebeanordnung eine mechanisch bedienbare Aktor-Verstellvorrichtung, um das Übersetzungsverhältnis alternativ zum Normalbetrieb manuell verstellen zu können.

Bevorzugt schafft die Erfindung im Falle eines Stillstands des Fortbewegungsmittels die Möglichkeit einer manuellen Verstellung des Übersetzungsverhältnisses, insbesondere zur Notbetätigung des im regulären, störungsfreien Betrieb motorisch verstellbaren Variatorgetriebes. Die Erfindung weist gegenüber dem Stand der Technik den Vorteil auf, dass ein Fahrer im Falle einer Panne, beispielsweise aufgrund eines leeren Akkus oder eines Defekts, ein für die Geländetopographie geeignetes Übersetzungsverhältnis einstellen kann. Sofern Schaltunterstützung bzw. Schaltautomatik in einer Position mit einem sehr hohen Übersetzungsverhältnis bzw. einem schnellen Gang versagt, kann ansonsten ein Weiterfahren nahezu unmöglich werden. Mit der erfindungsgemäßen Getriebeanordnung kann der Fahrer für die muskelbetriebene Weiterfahrt bergauf nach Hause oder in eine Werkstatt in ein untersetzendes, einem niedrigen Gang entsprechendes, Übersetzungsverhältnis per Hand verstellen. Dadurch bietet die Erfindung erhebliche Vorteile im Bereich des Komforts und der persönlichen Sicherheit des Fahrers.

Ferner erweist sich die manuelle Betätigungsmöglichkeit im Stillstand vorteilhaft im Zuge von Reparaturen des Variatorgetriebes bzw. der Baugruppe um den Traktionsantrieb des Fortbewegungsmittels.

Es ist im Rahmen der Erfindung unwesentlich, wo die erfindungsgemäße Getriebeanordnung oder einzelne Baugruppen der Getriebeanordnung am Fortbewegungsmittel angeordnet sind. Beispielsweise kann sie in der Motoreinheit oder separat an der angetriebenen Welle angeordnet sein.

Die Unteransprüche zeigen bevorzugte Weiterbildungen der Erfindung.

Bevorzugt ist die Aktor-Verstellvorrichtung ausschliesslich bei Stillstand des Fortbewegungsmittels verstellbar. Dies betrifft eine vorteilhafte Anwendung insbesondere nach unplanmäßiger Betriebsstörung des elektrischen Antriebs. Dies kann zum Beispiel der Fall sein, wenn der Akku leer ist oder bei einem technischen Defekt. In einem solchen Fall kann im Stand der Technik beispielsweise eine Weiterfahrt mit einem Elektrofahrrad nahezu unmöglich werden, wenn die Schaltung im schnellsten Gang bzw. der längsten Übersetzung stehend versagt. Dies wäre vergleichbar zu einem normalen Fahrrad, auf welchem man nur noch in dem höchsten Gang fahren könnte. Dies erschwert ein Anfahren nach einem Stopp oder ein Hinauffahren gegen eine Höhensteigung erheblich bzw. kann eine solche sogar unmöglich machen. Insbesondere ermöglicht eine Notbetätigung bei Stillstand eine Weiterfahrt. Insbesondere um einen Schaden in der Mechanik des Aktors zu verhindern, ist es bevorzugt, dass ein Stillstand des Fortbewegungsmittels sichergestellt ist, bevor die erfindungsgemäße Aktor-Verstellvorrichtung manuell betätigt werden kann. Auch ist bei solchen bevorzugten Ausführungsformen die Verletzungsgefahr für den Anwender im Zuge des manuellen Eingreifens in eine Mechanik mit beweglichen Teilen vorteilhaft minimiert.

Das bevorzugte Einsatzgebiet der Erfindung umfasst alle Arten von durch einen elektrischen Antrieb betreibbaren Fortbewegungsmitteln. Insbesondere zählen dazu im Rahmen der Erfindung verschiedene Muskelkraft-betreibbare Fahrzeugkonzepte mit elektrischem Hilfsantrieb wie Fahrräder mit Trethilfe, Elektrofahrräder, sogenannte "e-bikes", und/oder "Pedelecs" und/oder Elektroleichtfahrzeuge (sogenannte LEVs / Light Electric Vehicles). Umfasst sind zum einen Fahrräder mit Hilfsantrieb, bei denen der Fortbewegungsmotor erst unterstützt, wenn der Radfahrer in die Pedale tritt. Umfasst sind zum anderen Fahrräder mit Hilfsantrieb, bei welchen der Radfahrer nicht notwendigerweise in die Pedale treten muss und die auch ausschließlich durch den Fortbewegungsmotor angetrieben werden können. Es sei hier angemerkt, dass die Anzahl der Räder, meist zwei oder drei, für die Erfindung unwesentlich ist. Ferner ist es im Sinne der Erfindung nicht wesentlich, ob das Fortbewegungsmittel nach Auslegung von Artikel 1(h) der Richtlinie 2002/24/EG in den Geltungsbereich der Gesetzgebung für zwei- oder dreirädrige Kraftfahrzeuge fällt oder gerade nicht fällt. Insofern limitiert sich die Erfindung auch nicht auf Fortbewegungsmittel mit einer bauartbedingten Höchstgeschwindigkeit von unter 25 km/h.

In einer bevorzugten Ausführungsform der Erfindung sind stufenlos verstellbare Variatorgetriebe bevorzugt. Stufenlos verstellbar bedeutet, dass es keine festen Übersetzungsstufen gibt.

Diese können als mechanische stufenlose Getriebe und/oder elektrische stufenlose Getriebe und/oder hydrostatische stufenlose Getriebe und/oder hydrodynamische Drehmomentwandler ausgeführt sein. Einerseits sind sogenannte CVT-Getriebe (für: "Continuously Variable Transmission") mit einem begrenzten Regelbereich bevorzugt. Andererseits sind sogenannte IVT-Getriebe (für: "Infinitely Variable Transmission") bevorzugt, welche zwischen einem festen Übersetzungswert in einer Übertragungsrichtung beliebig ins Langsame "nach Unendlich") untersetzen können: Mit anderen Worten dreht sich die angetriebene Welle, während die abgetriebene Welle steht. Dadurch kann in einem Fahrzeug die Anfahrkupplung entfallen. Sogar eine Drehrichtungsumkehr der Welle ist möglich. Es ist insbesondere für elektrisch antreibbare Fahrräder bevorzugt, Variatorgetriebe als stufenlose Nabengetriebe auszuführen. Vorzugsweise handelt sich um ein stufenlos verstellbares Planetengetriebe. Vorteile der stufenlos verstellbaren Planetengetriebe liegen in ihrer einfachen Bauweise, Stabilität, Skalierbarkeit sowie in niedrigen Herstellungskosten. Beispielsweise sind stufenlose Planetengetriebe mit Reibschluss zwischen Kugeln und Kegelfläche unter dem Markennamen "NuVinci" des Herstellers "Fallbrook Technologies" eingeführt.

Gemäß einer vorteilhaften Weiterbildung weist die Aktor-Verstellvorrichtung eine nach außen frei zugänglich angeordnete Aktorverstellvorrichtungs-Schnittstelle auf, über welche die manuelle Verstellung vorgenommen werden kann. Dazu ist die Aktorverstellvorrichtungs-Schnittstelle zur Bildung einer lösbaren, insbesondere formschlüssigen, Verbindung zusammen mit einem äußeren manuellen Bedienelement ausgeführt. Insbesondere kann ein Innensechs- bzw. vierkant vorgesehen sein. Des Weiteren kann die Aktorverstellvorrichtungs-Schnittstelle als ein Schraubenmitnahmeprofil in Vielrundform (z.B. "Torx") ausgeführt sein. Bei einer bevorzugten Ausführungsform in Form eines Längsschlitzes ist dieser idealerweise so bemaßt, dass sich der Aktor mittels eines handelsüblichen Schraubendrehers und/oder einer Geldmünze durch manuelle Drehung verstellen lässt. Letztere Variante kommt vorzugsweise bei einer Betätigungsart mit einem geringeren Kraftaufwand und/oder einer nicht zu hohen Anzahl an nötigen Umdrehungen in Frage.

Insbesondere ist es möglich, die Aktorverstellvorrichtungs-Schnittstelle in einem Bereich anzuordnen, welcher im regulären Funktionsbetrieb des Fortbewegungsmittels gerade nicht in einem für den Anwender leicht zugänglichen Bereich liegt, sondern ausschließlich bei Stillstand des Fortbewegungsmittels erreichbar ist. Damit kann eine bevorzugte manuelle Betätigung ausschließlich im Stillstand intuitiv unterstützt werden, wodurch eine potentielle Beschädigung des sensiblen Präzisionsbauteils des Aktors im Vorfeld vermieden wird. Beispielsweise kann die Aktorverstellvorrichtungs-Schnittstelle in den Umdrehungsbereich der Pedale gelegt werden.

Vorzugsweise ist das Bedienelement abnehmbar und separat vorgesehen. Beispielsweise kann das Bedienelement als eine handliche Handkurbel in Form einer um zwei 90°-Biegungen gewinkelten Stange vorgesehen sein, welche in eine Aktorverstellvorrichtungs-Schnittstelle einsteckbar ist. Um im Sinne einer vorteilhaften Leichtbauweise ein weiteres Zusatzteil zu vermeiden, entspricht das Bedienelement bevorzugt einem ohnehin vorgesehenen Bauteil der Aktor-Verstellvorrichtung und/oder des Fortbewegungsmittels und/oder einer Zusatzvorrichtung für das Fortbewegungsmittel. Beispielsweise kann ein Zubehör oder ein Bauteil eines Zubehörs für das Fortbewegungsmittel als Bedienelement verwendet werden, beispielsweise eine Handluftpumpe, ein Bauteil eines Bordcomputers und/oder eines Akkus. In einer bevorzugten Ausführungsform unter Verwendung einer Handluftpumpe, wie sie zum Aufpumpen von Schlauchreifen mitgeführt wird, als Bedienelement kann diese entweder an die entsprechend passend eingerichtete Aktorverstellvorrichtungs-Schnittstelle direkt angesetzt oder mittels eines Zwischenadapterstückes mit letzterer verbunden werden. Insbesondere ist es bevorzugt, dass ein Standardwerkzeug als Bedienelement in die Aktorverstellvorrichtungs-Schnittstelle passt, beispielsweise ein Steckschlüssel, wie er ohnehin in einem kleinen Reifenwechselset und/oder Reparaturkit mitgeführt wird.

Idealerweise ist das Bedienelement dazu vorgesehen und eingerichtet, bei Nicht-Verwendung am Fortbewegungsmittel befestigt zu werden, beispielsweise indem es ähnlich einer Fahrradpumpe in einer Halterung am Rahmen einklemmbar ist.

Zum Schutze gegen Verschmutzung kann bevorzugt eine Einhausung des Aktors und/oder des Variatorgetriebes vorgesehen sein. Dann ist in der Einhausung eine Öffnung für den Zugriff auf die Aktorverstellvorrichtungs-Schnittstelle vorzusehen. Vorzugsweise ist letztere im Bereich der Öffnung mit einem Schutzdeckel versehen. Vergleichbar einem Tankdeckel kann dieser vorzugsweise abnehmbar und/oder verschwenkbar ausgeführt sein.

Was eine nicht beanspruchte bevorzugte Konstruktion der Aktor-Verstellvorrichtung betrifft, ist diese durch translatorische und/oder rotatorische Bewegung mechanisch bedienbar.

Mit anderen Worten kann der Aktor von außen vorzugsweise durch Drücken, Ziehen, Drehen und/oder Schwenken manuell betätigt werden. Je nach Bauweise und Rahmenbedingungen des im Normalbetrieb motorisch bzw. elektrisch betreibbaren Aktors hinsichtlich Platz und mechanischen Wirkprinzipien kann es bevorzugt sein, dass die Aktor-Verstellvorrichtung mit einer Welle eines Aktor-Motors und/oder einem Teil eines Aktor-Getriebes des Aktors verbunden ist. Alternativ oder zusätzlich kann die Aktor-Verstellvorrichtung mit einem Teil der Welle des Aktor-Motors und/oder einem Teil des Aktor-Getriebes zusammenfallen.

Gemäß einer vorteilhaften Weiterbildung sind bauliche Vorkehrungen getroffen, um einen Schaden in der Mechanik des Aktors durch unsachgemäße Betätigung zu verhindern. Dies wird vorzugsweise durch Sicherungselemente verhindert. Solche können unterschiedlich ausgestaltet sein. In einer nicht beanspruchten möglichen Variante kann eine optionale Überlastkupplung in die Aktor-Verstellvorrichtung eingebaut sein, welche beispielsweise wie eine Durchrutschkupplung bei Überschreiten eines Grenzdrehmomentes und/oder einer Grenzscherkraft ausweicht. In einer weiteren alternativen oder zusätzlichen Variante kann eine, vorzugsweise mechanische, Sperrvorrichtung und/oder ein Endanschlag eingebaut sein. Dazu kann konstruktiv der Einbau intern und/oder für das Bedienelement wie eine Handkurbel vorgesehen sein. Alternativ und/oder zusätzlich ist als eine dritte Variante eine Markierung der Aktorstellung denkbar, anhand derer der Radfahrer erkennen kann, wie weit er die Notbetätigung kurbeln darf. Bevorzugt kann mit Ampelfarben der zulässige Verstellbereich des Aktors auf dem Aktor bzw. einem Aktorbauteil und/oder an der Aktorverstellvorrichtungs-Schnittstelle optisch markiert werden. Beispielsweise ist der Fall einer Schraubstangen-förmigen Ausführung eines Aktor-Übertragungselementes möglich, indem bei jeder weiteren Drehung in einen kritischen Grenzbereich eine weitere Steigungshöhe zunächst orange, dann rot lackiert sichtbar heraustritt. In weiteren bevorzugten Ausführungsform kann das Sicherungselement dem Anwender eine Stellposition und/oder einen zulässigen Verstellbereich des Aktors auch haptisch, z.B. durch eine zunehmende Verstellkraft, und/oder akustisch signalisieren.

Um einer Manipulation der Getriebeanordnung durch unberechtigte Dritte vorzubeugen, kann gemäß einer vorteilhaften Weiterbildung die Aktor-Verstellvorrichtung und/oder die Aktorverstellvorrichtungs-Schnittstelle eine Zugangsberechtigungsüberprüfung vorsehen. Erst bei einer entsprechend vorliegenden Zugangsberechtigung eines Fahrers und/oder Anwenders des Fortbewegungsmittels findet eine Freigabe der manuellen Verstellbarkeit der Aktor-Verstellvorrichtung statt. Bevorzugt kann dies in automatischer Bauart ausgeführt sein. Im Sinne der Einfachheit und Funktionsbereitschaft auch bei Betriebsstörungen sind Ausführungsformen nach einem mechanischen Schlüssel-Schloss-Prinzip jedoch besonders bevorzugt, beispielsweise ein Schloss, welches mit einem Schlüssel des Fortbewegungsmittels, insbesondere des Elektrofahrrads, und/oder seines elektrischen Antriebs korrespondiert.

Als weiterer Aspekt der vorliegenden Erfindung wird ein Fortbewegungsmittel vorgeschlagen, welches durch einen elektrischen Antrieb betreibbar ist und eine erfindungsgemäße Getriebeanordnung aufweist. Hinsichtlich Merkmalen, Vorteilen und bevorzugten Ausführungsformen des erfindungsgemäßen Fortbewegungsmittels wird zur Vermeidung von Wiederholungen auf die obigen Ausführungen verwiesen.

### Kurze Beschreibung der Zeichnung

Nachfolgend wird ein Ausführungsbeispiel der Erfindung unter Bezugnahme auf die begleitende Zeichnung im Detail beschrieben. In der Zeichnung ist:

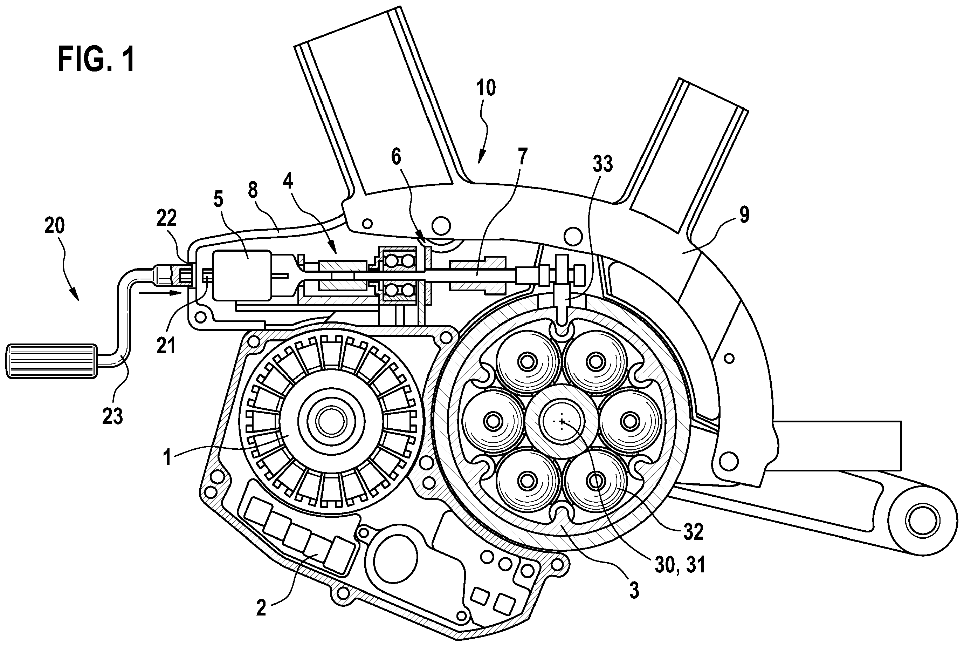

- Figur 1: eine schematische Darstellung als Querschnittsansicht eines Ausführungsbeispiels einer erfindungsgemäßen Getriebeanordnung mit einem Ausführungsbeispiel einer Aktorverstellvorrichtung an einem Rahmen eines Fahrrads als ein Ausführungsbeispiel eines erfindungsgemäßen Fortbewegungsmittels.

### Ausführungsform der Erfindung

Figur 1 zeigt ein Ausführungsbeispiel einer erfindungsgemäßen Getriebeanordnung 10 im Querschnitt, in welcher ein Ausführungsbeispiel einer mechanisch bedienbaren Aktorverstellvorrichtung 20 eingebaut ist. In dem hier gezeigten Ausführungsbeispiel eines Elektrofahrrads als ein erfindungsgemäßes Fortbewegungsmittel ist die Getriebeanordnung 10 an einem unteren Ende eines Fahrradrahmens 9 angeordnet. Zu deren Schutz gegen Verschmutzung ist eine äußere Einhausung 8 vorgesehen.

In dem hier gezeigten Beispiel ist zunächst ein elektrischer Hilfsantrieb gemäß Stand der Technik zu erkennen, welcher einen Fortbewegungsmotor 1, eine zugeordnete Fortbewegungsmotorelektrik 2 sowie ein Variatorgetriebe 3 umfasst: Bei dem Variatorgetriebe 3 (kurz: "Variator") handelt sich um ein stufenlos verstellbares Planetengetriebe. Die Anlehnung an das Planetengetriebeprinzip ergibt sich aus der Übertragung des Drehmomentes durch die orthogonal in die Bildebene zeigende Nabe 30 hindurch über ein Set von hier sechs rotierenden Kugeln 32. Diese rotieren zum einen um eine gemeinsame Mittelpunktachse 31 sowie zum anderen um jeweils eine eigene Einzelachse. Durch Veränderung des Anstellwinkels der Einzelachsen der Kugeln 32 verändert sich der Kontaktpunkt mit der krafteinleitenden ersten Seite (nahe dem Ritzel) bzw. der kraftausleitenden zweiten Seite (nahe dem Hinterrad). Auf diese Weise wird das Übersetzungsverhältnis des Variatorgetriebes 3 stufenlos verändert.

Ein zur, hier elektrischen, Schaltunterstützung vorgesehener Aktor 4 umfasst einen als kleiner Servomotor 5 ausgeführten Aktor-Motor sowie ein Aktor-Getriebe 6. Dabei bezieht der Aktor 4 eine Ansteuerung (nicht dargestellt) vom Drehgriff am Lenkrad des Fahrrads, mit welcher der Fahrer einen gewünschten Gang im regulären Betrieb schaltgestützt wählen kann. Ein als Steuerstab 7 ausgeführtes Aktor-Übertragungselement des Aktors 4 bewegt ein hier oberhalb angeordnetes zentrales Leitrad 33 hin und her (quer zur Bildebene). Indem die Einzelachsen der Kugeln 32 vom Leitrad 33 gestützt werden, erfolgt die Ansteuerung des Übersetzungsverhältnisses gemäß dem stufenlos durch Verschwenkung des Leitrades 33 angesteuerten Anstellwinkel.

Links in Figur 1 ist die mechanisch bedienbare Aktorverstellvorrichtung 20 zu erkennen, welche in diesem Ausführungsbeispiel in Form einer in die Einhausung 8 gebohrten Öffnung 22 einen Zugang zu einer Aktorverstellvorrichtungs-Schnittstelle 21 freigibt. In diese kann der Fahrer von außen das als einfache Drehhandkurbel 23 ausgeführte Bedienelement formschlüssig einstecken. Ein als Außensechskant ausgeführtes Ende der Drehhandkurbel wird in eine als entsprechender Innensechskant ausgeführte Aktorverstellvorrichtungs-Schnittstelle 21 gesteckt. Durch manuelles Kurbeln der Drehhandkurbel 23 kann so dann das als Steuerstab 7 ausgeführtes Aktor-Übertragungselement des Aktors 4 auch bei Wegfall der elektrischen Versorgung bewegt werden. Auf diese Weise ist im Stillstand und selbst als Notbetätigung die stufenlose Verstellung des Übersetzungsverhältnisses ermöglicht.

## Patentansprüche

1. Getriebeanordnung (10) für ein Muskelkraft-betreibbares Fahrzeug mit einem elektrischen Hilfsantrieb, insbesondere ein Elektrofahrrad, wobei die Getriebeanordnung (10) den elektrischen Hilfsantrieb und ein Variatorgetriebe (3) mit einem mittels eines motorisch betreibbaren Aktors (4) verstellbaren Übersetzungsverhältnis aufweist,
**dadurch gekennzeichnet, dass**
- die Getriebeanordnung (10) weiter eine mechanisch bedienbare Aktor-Verstellvorrichtung (20) umfasst, und
- die Getriebeanordnung (10) eingerichtet ist, mittels der Aktor-Verstellvorrichtung (20) manuell in dem Übersetzungsverhältnis verstellt zu werden.

2. Getriebeanordnung nach einem der vorstehenden Ansprüche, wobei die Aktor-Verstellvorrichtung (20) ausschließlich bei Stillstand des Fahrzeugs verstellbar ist.

3. Getriebeanordnung nach Anspruch 1 oder 2, wobei das Variatorgetriebe (3) stufenlos verstellbar, insbesondere als ein Planetengetriebe,
ausgeführt ist.

4. Getriebeanordnung nach einem der vorstehenden Ansprüche, wobei die Aktor-Verstellvorrichtung (20) mittels einer nach außen frei zugänglich angeordneten Aktorverstellvorrichtungs-Schnittstelle (21) zur manuellen Verstellung des Übersetzungsverhältnisses eingerichtet ist und die Aktorverstellvorrichtungs-Schnittstelle (21) zur Bildung einer lösbaren, formschlüssigen Verbindung zusammen mit einem äußeren manuellen Bedienelement (23) ausgeführt ist.

5. Getriebeanordnung nach Anspruch 4, wobei das Bedienelement (23) als ein abnehmbares, vorzugsweise bei Nicht-Verwendung am Fortbewegungsmittel befestigbares, Bauteil der Aktor-Verstellvorrichtung (20) und/oder des Fortbewegungsmittels und/oder einer Zusatzvorrichtung für das Fortbewegungsmittel und/oder als ein Standardwerkzeug ausgeführt ist.

6. Getriebeanordnung nach einem der vorstehenden Ansprüche, weiter umfassend eine Einhausung (8) des Aktors (4) und/oder des Variatorgetriebes (3), welche eine Öffnung für den Zugriff auf die Aktorverstellvorrichtungs-Schnittstelle (21) aufweist, wobei die Öffnung mit einem abnehmbaren und/oder verschwenkbaren Schutzdeckel versehen ist.

7. Getriebeanordnung nach einem der vorstehenden Ansprüche, wobei die Aktor-Verstellvorrichtung (20) weiter ein zum Verhindern einer mechanischen Beschädigung des Aktors (4) durch manuelles Verstellen eingerichtetes Sicherungselement umfasst.

8. Getriebeanordnung nach einem der vorstehenden Ansprüche , wobei die Aktor-Verstellvorrichtung (20) und/oder die Aktorverstellvorrichtungs-Schnittstelle (21) eingerichtet ist, eine automatische und/oder nach einem mechanischen Schlüssel-Schloss-Prinzip ausgeführte Zugangsberechtigungsüberprüfung eines Fahrers und/oder Anwenders des Fortbewegungsmittels vorab einer entsprechenden Freigabe oder Nicht-Freigabe der manuellen Verstellbarkeit der Aktor-Verstellvorrichtung (20) durchzuführen.

9. Fortbewegungsmittel, welches durch einen elektrischen Antrieb betreibbar ist und eine Getriebeanordnung (10) nach einem der vorstehenden Ansprüche aufweist.

## Claims

1. Transmission assembly (10) for a vehicle operable by muscle power having an auxiliary electric drive, in particular an electric bicycle, wherein the transmission assembly (10) has the auxiliary electric drive and a variator transmission (3) having a transmission ratio which is adjustable by means of an actuator (4) which can be operated by motor, **characterized in that**
- the transmission assembly (10) furthermore comprises a mechanically operable actuator-adjustment device (20), and
- the transmission assembly (10) is designed to be adjusted in transmission ratio manually by means of the actuator-adjustment device (20).

2. Transmission assembly according to one of the preceding claims, wherein the actuator-adjustment device (20) is adjustable exclusively when the vehicle is at a standstill.

3. Transmission assembly according to Claim 1 or 2, wherein the variator transmission (3) is designed to be infinitely variably adjustable, in particular in the form of a planetary transmission.

4. Transmission assembly according to one of the preceding claims, wherein the actuator-adjustment device (20) is designed to use an actuator-adjustment-device interface (21), arranged so as to be freely accessible to the outside for the manual adjustment of the transmission ratio, and the actuator-adjustment-device interface (21) is designed for forming a releasable, form-fitting connection together with an outer, manual operating element (23).

5. Transmission assembly according to Claim 4, wherein the operating element (23) is designed as a removable component, which is preferably fastenable to the means of transport when not in use, of the actuator-adjustment device (20) and/or of the means of transport and/or of an additional device for the means of transport and/or is designed in the form of a standard tool.

6. Transmission assembly according to one of the preceding claims, furthermore comprising a housing (8) of the actuator (4) and/or of the variator transmission (3), which housing has an opening for access to the actuator-adjustment-device interface (21), wherein the opening is provided with a removable and/or pivotable protective cover.

7. Transmission assembly according to one of the preceding claims, wherein the actuator-adjustment device (20) furthermore comprises a securing element designed for preventing mechanical damage to the actuator (4) by the manual adjustment.

8. Transmission assembly according to one of the preceding claims, wherein the actuator-adjustment device (20) and/or the actuator-adjustment-device interface (21) are/is designed to carry out an access authorization check of a driver and/or user of the means of transport, the check being automatic and/or carried out in accordance with a mechanical lock and key principle, prior to correspondingly enabling or not enabling the manual adjustability of the actuator-adjustment device (20).

9. Means of transport which is operable by means of an electric drive, and a transmission assembly (10) according to one of the preceding claims.

## Revendications

1. Ensemble de transmission (10) destiné à un véhicule pouvant être entraîné par la force musculaire et pourvu d'un entraînement électrique auxiliaire, en particulier un vélo électrique, l'ensemble de transmission (10) comprenant un entraînement auxiliaire électrique et une transmission à variateur (3) dont le rapport de transmission est réglable à l'aide d'un actionneur motorisé (4),
**caractérisé en ce que**
- l'ensemble de transmission (10) comprend en outre un dispositif de réglage d'actionneur à commande mécanique (20), et
- l'ensemble de transmission (10) est adapté pour être réglé manuellement en termes de rapport de transmission à l'aide du dispositif de réglage d'actionneur (20).

2. Ensemble de transmission selon l'une des revendications précédentes, le dispositif de réglage d'actionneur (20) n'étant réglable que lorsque le véhicule est à l'arrêt.

3. Ensemble de transmission selon la revendication 1 ou 2, la transmission à variateur (3) étant réglable en continu, notamment étant réalisée sous la forme d'une transmission planétaire.

4. Ensemble de transmission selon l'une des revendications précédentes, le dispositif de réglage d'actionneur (20) étant adapté pour régler manuellement le rapport de transmission à l'aide d'une interface de dispositif de réglage d'actionneur (21) disposée de manière librement accessible à l'extérieur et l'interface de dispositif de réglage d'actionneur (21) étant réalisée conjointement avec un élément de commande manuel extérieur (23) pour former une liaison libérable par complémentarité de formes.

5. Ensemble de transmission selon la revendication 4, l'élément de commande (23) étant réalisé sous la forme d'un composant amovible, de préférence qui peut être fixé au moyen de transport lorsqu'il n'est pas utilisé, du dispositif de réglage d'actionneur (20) et/ou du moyen de transport et/ou d'un dispositif supplémentaire destiné au moyen de transport et/ou sous la forme d'un outil standard.

6. Ensemble de transmission selon l'une des revendications précédentes, comprenant en outre un logement (8) de l'actionneur (4) et/ou de la transmission à variateur (3), lequel logement comporte une ouverture permettant d'accéder à l'interface de dispositif de réglage d'actionneur (21), l'ouverture étant pourvue d'un couvercle de protection amovible et/ou pivotant.

7. Ensemble de transmission selon l'une des revendications précédentes, le dispositif de réglage d'actionneur (20) comprenant en outre un élément de fixation adapté pour éviter un endommagement mécanique de l'actionneur (4) par réglage manuel.

8. Ensemble de transmission selon l'une des revendications précédentes, le dispositif de réglage d'actionneur (20) et/ou l'interface de dispositif de réglage d'actionneur (21) étant adaptés pour effectuer une vérification d'autorisation d'accès d'un conducteur et/ou d'un utilisateur du moyen de transport de manière automatique et/ou selon un principe clé-serrure mécanique avant une libération ou une non-libération correspondante du réglage manuel du dispositif de réglage d'actionneur (20).

9. Moyen de transport pouvant être actionné par un entraînement électrique et comportant un ensemble de transmission (10) selon l'une des revendications précédentes.
